(19) Europäisches Patentamt / European Patent Office / Office européen des brevets

(11) **EP 4 661 113 A1**

(12) **EUROPEAN PATENT APPLICATION**
published in accordance with Art. 153(4) EPC

(43) Date of publication:
**10.12.2025 Bulletin 2025/50**

(21) Application number: **24750324.6**

(22) Date of filing: **31.01.2024**

(51) International Patent Classification (IPC):
***H01M 4/62*** *(2006.01)* ***C08F 8/48*** *(2006.01)*
***C08F 214/22*** *(2006.01)*

(52) Cooperative Patent Classification (CPC):
**C08F 8/48; C08F 214/22; H01M 4/62;** Y02E 60/10

(86) International application number:
**PCT/JP2024/003005**

(87) International publication number:
**WO 2024/162375 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 JP 2023013410**

(71) Applicant: **Kureha Corporation**
**Chuo-ku**
**Tokyo 103-8552 (JP)**

(72) Inventors:
- **TAKAHASHI, Yukihiro**
**Tokyo 103-8552 (JP)**
- **YAMANE, Takuya**
**Tokyo 103-8552 (JP)**
- **SAKAI, Yuki**
**Tokyo 103-8552 (JP)**
- **SUGAHARA, Mayumi**
**Tokyo 103-8552 (JP)**

(74) Representative: **Zimmermann & Partner Patentanwälte mbB**
**Postfach 330 920**
**80069 München (DE)**

# (54) BINDER, ELECTRODE MIXTURE, ELECTRODE, BATTERY, AND MANUFACTURING METHOD FOR BINDER

(57) Provided is a binder containing a novel vinylidene fluoride copolymer having excellent adhesion to metal foil when an electrode is formed, an electrode mixture containing the binder, an electrode using the electrode mixture, a battery including the electrode, and a method for manufacturing the binder. A binder containing a vinylidene fluoride copolymer (A) containing, in a main chain, a structural unit (a1) derived from vinylidene fluoride and a structural unit (a2) having a cyclic acid anhydride structure is used. As the binder, the structural unit (a2) having a cyclic acid anhydride structure is preferably a structural unit represented by Formula (1) or Formula (2) described below. where in Formulas (1) and (2), $R_1$ and $R_2$ each independently represent a hydrogen atom, a halogen atom, or an alkyl group having from 1 to 5 carbons, and X represents an alkylene group having from 1 to 5 carbons and optionally having a substituent.

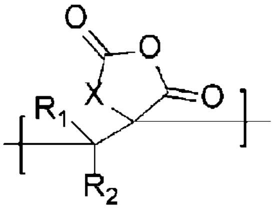

・・・(1)

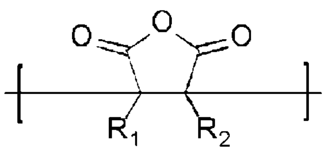

・・・(2)

EP 4 661 113 A1

## Description

### TECHNICAL FIELD

The present invention relates to a binder, an electrode mixture, an electrode, a battery, and a method for manufacturing a binder.

### BACKGROUND ART

A vinylidene fluoride polymer such as polyvinylidene fluoride is mainly used as a binder (binding agent) for an electrode of a non-aqueous electrolyte secondary battery. The binder is required to have high adhesion due to its role in adhering an active material to a current collector.

For example, Patent Document 1 discloses that an electrode prepared by using a binder composition containing a copolymer of vinylidene fluoride and a compound represented by Formula (3) described below has high peel strength.

[Chem. 1]

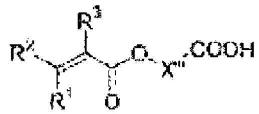

・・・(3)

### CITATION LIST

### PATENT DOCUMENT

Patent Document 1: JP 5797206 B

### SUMMARY OF INVENTION

### TECHNICAL PROBLEM

However, even with these copolymers, adhesion to metal foil is not sufficient yet. Thus, a copolymer having excellent adhesion to metal foil is required as a binder.

The present invention has been made in view of the above problems, and an object of the present invention is to provide a binder containing a novel vinylidene fluoride copolymer having excellent adhesion to metal foil when an electrode is formed, an electrode mixture containing the binder, an electrode using the electrode mixture, a battery including the electrode, and a method for manufacturing the binder.

### SOLUTION TO PROBLEM

As a result of intensive studies to achieve the above object, the present inventors have found that the above object can be achieved by using a binder containing a vinylidene fluoride copolymer containing, in the main chain of the polymer, a structural unit (a2) having a cyclic acid anhydride structure, and have completed the present invention.

An aspect of the present invention relates to the following binder, electrode mixture, electrode, battery, and method for manufacturing a binder, which include a vinylidene fluoride copolymer containing the structural unit (a2) described above.

[1] A binder containing a vinylidene fluoride copolymer (A) containing, in a main chain, a structural unit (a1) derived from vinylidene fluoride and a structural unit (a2) having a cyclic acid anhydride structure.

[2] The binder according to [1], in which the structural unit (a2) having a cyclic acid anhydride structure is a structural unit represented by Formula (1) or Formula (2) described below:

[Chem. 2]

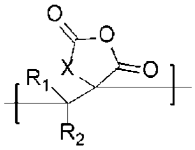 ・・・(1) 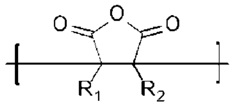 ・・・(2)

where in Formulas (1) and (2), $R_1$ and $R_2$ each independently represent a hydrogen atom, a halogen atom, or an alkyl group having from 1 to 5 carbons, and X represents an alkylene group having from 1 to 5 carbons and optionally having a substituent.

[3] The binder according to [1] or [2], in which the main chain of the vinylidene fluoride copolymer (A) contains at least one structural unit (a3) selected from the group consisting of a structural unit represented by Formula (3) described below, a structural unit represented by Formula (4) described below, and a structural unit represented by Formula (5) described below:

[Chem. 3]

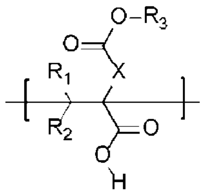 ・・・(3)

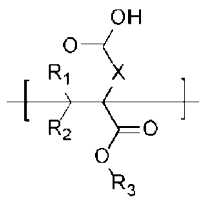 ・・・(4)

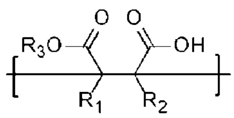 ・・・(5)

where in Formula (3), Formula (4), and Formula (5), $R_1$ and $R_2$ are each independently a hydrogen atom, a halogen atom, or an alkyl group having from 1 to 5 carbons, and $R_3$ represents a hydrogen atom or an alkyl group having from 1 to 5 carbons, and X represents an alkylene group having from 1 to 5 carbons and optionally having a substituent.

[4] The binder according to any one of [1] to [3], in which a content of the structural unit (a2) with respect to all structural units of the vinylidene fluoride copolymer (A) is 0.001 mol% or more and 1.0 mol% or less.

[5] The binder according to [3] or [4], in which when a total of the structural unit (a2) and the structural unit (a3) in the vinylidene fluoride copolymer (A) is 100 mol%, the content of the structural unit (a2) is 1.0 mol% or more and 99.0 mol% or less.

[6] An electrode mixture containing:

the binder described in any one of [1] to [5]; and
an active material (B).

[7] An electrode including:

a current collector; and

an electrode mixture layer disposed on at least one surface of the current collector, the electrode mixture layer containing the electrode mixture described in [6].

[8] A battery including the electrode described in [7].
[9] A method for manufacturing the binder according to any one of [1] to [5], the method including:

obtaining a polymer having a main chain containing a structural unit (a1) derived from vinylidene fluoride and at least one structural unit (a3) selected from the group consisting of a structural unit represented by Formula (3), a structural unit represented by Formula (4), and a structural unit represented by Formula (5); and
heating the polymer and obtaining the structural unit (a2) from the structural unit (a3).

## ADVANTAGEOUS EFFECTS OF INVENTION

According to the present invention, it is possible to provide a binder containing a novel vinylidene fluoride copolymer having excellent adhesion to metal foil when an electrode is formed, an electrode mixture containing the binder, an electrode using the electrode mixture, a battery including the electrode, and a method for manufacturing the binder.

## BRIEF DESCRIPTION OF THE DRAWINGS

FIG. 1 shows IR spectra obtained for vinylidene fluoride copolymers A1 to A6 prepared in Examples 1 to 5 and Comparative Example 1.
FIG. 2 shows $^{19}$F-NMR spectra obtained for vinylidene fluoride copolymers A1 to A6 prepared in Examples 1 to 5 and Comparative Example 1.

## DESCRIPTION OF EMBODIMENTS

Binder

The binder contains a vinylidene fluoride copolymer (A) containing, in the main chain of the polymer, a structural unit (a1) derived from vinylidene fluoride and a structural unit (a2) having a cyclic acid anhydride structure.
In the binder containing the vinylidene fluoride copolymer (A) containing the structural unit (a1), the inclusion of the structural unit (a2) produces an effect that an electrode formed using the binder has better adhesion to metal foil.
Hereinafter, essential or optional components contained in the binder will be described.
Vinylidene fluoride copolymer (A)
As described above, the vinylidene fluoride copolymer (A) contains, in the main chain, the structural unit (a1) derived from vinylidene fluoride and the structural unit (a2) having a cyclic acid anhydride structure.

Structural unit (a1) derived from vinylidene fluoride

The structural unit (a1) derived from vinylidene fluoride is a main structural unit of the vinylidene fluoride copolymer (A). The content of the structural unit (a1) derived from vinylidene fluoride with respect to all structural units of the vinylidene fluoride copolymer (A) is preferably 90.000 mol% or more and 99.999 mol% or less, and more preferably 99.000 mol% or more and 99.900 mol% or less.

Structural unit (a2) having cyclic acid anhydride structure

The structural unit (a2) having a cyclic acid anhydride structure means a structural unit having, in the main chain, at least one carbon atom forming a ring in the cyclic acid anhydride structure.
The cyclic acid anhydride structure means a structure in which an acid anhydride group (-CO-O-CO-) is contained in a ring. Examples of the cyclic acid anhydride structure include an alicyclic monocyclic acid anhydride structure in which the acid anhydride group is contained in a ring; a polycyclic acid anhydride structure A having a structure in which the alicyclic monocyclic acid anhydride structure is bonded to a carbon ring of an aromatic hydrocarbon having from 6 to 12 carbons to form a ring; and a polycyclic acid anhydride structure B having a structure in which the alicyclic monocyclic acid anhydride structure is bonded to a carbon ring of an alicyclic hydrocarbon having from 3 to 10 carbons to form a ring. Among these, the alicyclic monocyclic acid anhydride structure is preferable from the viewpoint of excellent adhesion to metal foil when an electrode is formed using a binder.

The alicyclic monocyclic acid anhydride structure corresponding to the structural unit (a2) is not particularly limited as long as it satisfies the above definition, and a structural unit represented by Formula (1) or Formula (2) described below is preferable. Among these, the structural unit represented by Formula (1) described below is more preferable from the viewpoint of excellent stability of the vinylidene fluoride copolymer (A).

[Chem. 4]

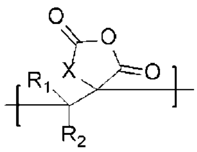 ・・・(1) 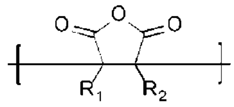 ・・・(2)

In Formulas (1) and (2) described above, $R_1$ and $R_2$ each independently represent a hydrogen atom, a halogen atom, or an alkyl group having from 1 to 5 carbons. X represents an alkylene group having from 1 to 5 carbons and optionally having a substituent.

The alkyl group having from 1 to 5 carbons in $R_1$ and $R_2$ is preferably a linear or branched alkyl group, and specific examples thereof include a methyl group, an ethyl group, a propyl group, an isopropyl group, a n-butyl group, an isobutyl group, a tert-butyl group, a pentyl group, an isopentyl group, and a neopentyl group.

The alkylene group having from 1 to 5 carbons in X is preferably a linear or branched alkylene group, and specific examples thereof include a methylene group, an ethylene group, a n-propylene group, and an isopropylene group.

From the viewpoint of availability of raw materials and the like, $R_1$ and $R_2$ are each preferably a hydrogen atom. From the same viewpoint, X is preferably an alkylene group having no substituent, and is preferably a methylene group.

The content of the structural unit (a2) with respect to all structural units of the vinylidene fluoride copolymer (A) is preferably 0.001 mol% or more and 1.000 mol% or less, more preferably 0.010 mol% or more and 1.000 mol% or less, still more preferably 0.100 mol% or more and 1.000 mol% or less, and even more preferably 0.200 mol% or more and 1.000 mol% or less, from the viewpoint that an electrode formed using a binder has excellent adhesion to metal foil.

Method for confirming structural unit (a2)

The presence of the structural unit (a2) having a cyclic acid anhydride structure in the vinylidene fluoride copolymer (A) can be confirmed by IR measurement using an infrared spectrophotometer. When the vinylidene fluoride copolymer (A) is subjected to IR measurement, in the obtained spectrum, in general, at least one peak is observed in each of the regions of from 1780 $cm^{-1}$ to 1800 $cm^{-1}$ and from 1850 $cm^{-1}$ to 1870 $cm^{-1}$ in which an absorption peak derived from a cyclic acid anhydride structure appears. When this peak is observed, it can be said that the vinylidene fluoride copolymer (A) has the structural unit (a2) having a cyclic acid anhydride structure.

Specifically, the spectrum is obtained according to the following procedures (1) to (3). (1) The vinylidene fluoride copolymer (A) is freeze-pulverized in liquid nitrogen using a freeze-pulverizer to obtain powder. (2) The obtained powder is mixed with potassium bromide and sufficiently ground in a mortar to obtain a mixture. (3) The obtained mixture is measured in a range of from 1500 $cm^{-1}$ to 4000 $cm^{-1}$ using a diffuse reflectance measurement device and an infrared spectrophotometer, and a spectrum is obtained by plotting the Kubelka-Munk transformed absorbance on the vertical axis and plotting the wavenumber on the horizontal axis.

The presence or absence of the peak is determined by differentiating regions of from 1780 $cm^{-1}$ to 1800 $cm^{-1}$ and from 1850 $cm^{-1}$ to 1870 $cm^{-1}$ of the obtained spectrum. It is determined that there is a peak at a wavenumber at which a differential value changes from a positive value to a negative value. On the other hand, when there is no wavenumber at which the differential value changes from the positive value to the negative value, it is determined that there is no peak in this region.

It can be confirmed by $^{19}F$-NMR measurement using a nuclear magnetic resonance apparatus that the vinylidene fluoride copolymer (A) has, in the main chain of the polymer, the structural unit (a1) derived from vinylidene fluoride and the structural unit (a2) having a cyclic acid anhydride structure. Specifically, when the vinylidene fluoride copolymer (A) is subjected to $^{19}F$-NMR measurement, in the obtained spectrum, when the largest peak derived from $^{19}F$ atoms of vinylidene fluoride at a normal binding site of the vinylidene fluoride copolymer (A) is set at -91.6 ppm, two peaks derived from $^{19}F$ atoms of the structural unit (a1) derived from vinylidene fluoride adjacent to the introduced cyclic acid anhydride structure appear at from -91.0 ppm to -89.0 ppm. When this peak is observed, it can be said that the vinylidene fluoride copolymer (A) has the cyclic acid anhydride structure in the main chain.

Other structural units

The main chain of the vinylidene fluoride copolymer (A) may contain a structural unit other than the structural unit (a1) and the structural unit (a2) as long as the effects of the present invention are not impaired. Examples of the other structural unit include a structural unit (a3) described later; and structural units derived from vinyl fluoride, trifluoroethylene, tetrafluoroethylene, chlorotrifluoroethylene, hexafluoropropylene, fluoroalkyl vinyl ether, perfluoroalkyl vinyl ether typified by perfluoromethyl vinyl ether, (meth)acrylic acid, (meth)acrylic acid ester typified by methyl (meth)acrylate, acryloyloxyethyl succinic acid, acryloyloxypropyl succinic acid, carboxyethyl acrylate, and the like.

Structural unit (a3)

Examples of the structural unit (a3) include at least one structural unit selected from the group consisting of a structural unit represented by Formula (3) described below, a structural unit represented by Formula (4) described below, and a structural unit represented by Formula (5) described below.

[Chem. 5]

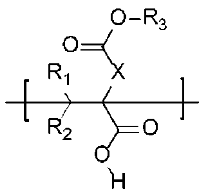

・・・(3)

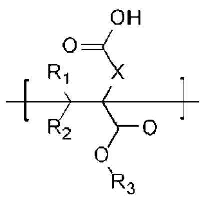

・・・(4)

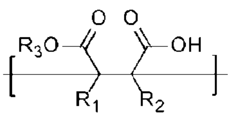

・・・(5)

In Formula (3), Formula (4), and Formula (5) described above, $R_1$ and $R_2$ are each independently a hydrogen atom, a halogen atom, or an alkyl group having from 1 to 5 carbons, and $R_3$ represents a hydrogen atom or an alkyl group having from 1 to 5 carbons. X represents an alkylene group having from 1 to 5 carbons and optionally having a substituent.

The alkyl group having from 1 to 5 carbons in $R_1$, $R_2$, and $R_3$ is preferably a linear or branched alkyl group, and specific examples thereof include a methyl group, an ethyl group, a propyl group, an isopropyl group, a n-butyl group, an isobutyl group, a tert-butyl group, a pentyl group, an isopentyl group, and a neopentyl group.

The alkylene group having from 1 to 5 carbons in X is preferably a linear or branched alkylene group, and specific examples thereof include a methylene group, an ethylene group, a n-propylene group, and an isopropylene group.

The structural unit (a3) is a structural unit that is not cyclized into the structural unit (a2) in an embodiment of a method for manufacturing the vinylidene fluoride copolymer (A) described later.

From the viewpoint that the electrode formed using the binder has excellent adhesion to metal foil, it is preferable that the content of the structural unit (a3) is small and the content of the structural unit (a2) is large. Thus, when a total of the structural unit (a2) and the structural unit (a3) in the vinylidene fluoride copolymer (A) is 100 mol%, the content of the structural unit (a2) is preferably 1.0 mol% or more and 100.0 mol% or less, preferably 10.0 mol% or more and 99.0 mol% or less, more preferably 30.0 mol% or more and 99.0 mol% or less, still more preferably 50.0 mol% or more and 99.0 mol% or less, and even more preferably 70.0 mol% or more and 99.0 mol% or less.

Physical properties of vinylidene fluoride copolymer (A)

Melting point

The melting point of the vinylidene fluoride copolymer (A) is preferably 160°C or higher and 180°C or lower, more preferably 165°C or higher and 178°C or lower, and most preferably 165°C or higher and 175°C or lower. When the melting point of the vinylidene fluoride copolymer (A) is 160°C or higher, swelling is less likely to be caused by an electrolyte solution, and the resulting battery tends to have good performances. On the other hand, when the melting point is 180°C or lower, flexibility of an electrode to be formed tends to be good. The melting point of the vinylidene fluoride copolymer (A) can be determined by calorimetry using the differential scanning calorimeter (DSC). Specifically, the vinylidene fluoride copolymer (A) is heated from 30°C to 230°C at 10°C/min (the first heating), cooled from 230°C to 30°C at 10°C/min (the first cooling), and further heated from 30°C to 230°C at 10°C/min (the second heating). A melting peak is then specified by DSC. In the present specification, the maximum melting peak temperature observed in the second heating is specified as a melting point of the vinylidene fluoride copolymer (A).

Inherent viscosity

The inherent viscosity of the vinylidene fluoride copolymer (A) is preferably 0.5 dL/g or more and 8.0 dL/g or less, more preferably 1.0 dL/g or more and 5.0 dL/g or less, and most preferably 1.0 dL/g or more and 4.0 dL/g or less. When the inherent viscosity is 0.5 dL/g or more, the adhesive strength between the binder (vinylidene fluoride copolymer (A)) and an active material and/or a current collector is enhanced. On the other hand, when the inherent viscosity is 5.0 dL/g or less, slurry viscosity does not become excessively high when electrode slurry is prepared, and excellent workability is achieved.

The inherent viscosity ($\eta_i$) represents logarithmic viscosity. First, the viscosity is measured by dissolving 80 mg of the vinylidene fluoride copolymer (A) in 20 mL of N,N-dimethylformamide, and using an Ubbelohde viscometer in a 30°C thermostatic bath. Then, based on the obtained value, calculation is performed by using the following equation.

$$\eta_i = (1/C) \bullet \ln(\eta/\eta_0)$$

In the above equation, $\eta$ is the viscosity of the solution, $\eta_0$ is the viscosity of N,N-dimethylformamide alone, which is a solvent, C is the concentration of the vinylidene fluoride copolymer in the solution, that is, 0.4 g/dL.

Method for manufacturing vinylidene fluoride copolymer (A)

Examples of the method for manufacturing the vinylidene fluoride copolymer (A) of the above-described embodiment containing the structural unit (a2) having a cyclic acid anhydride structure include a method (Method 1) of introducing the structural unit (a2) by copolymerizing a monomer having a cyclic structure such as maleic anhydride; and a method (Method 2) in which the structural unit (a3) is introduced by copolymerizing a monomer having an acyclic structure such as monomethyl itaconate, and then the structural unit (a2) is introduced by cyclizing the structural unit (a3).

The vinylidene fluoride copolymer (A) is preferably manufactured by aqueous suspension polymerization as described later. In the case of performing aqueous suspension polymerization, as a method for introducing the structural unit (a2), Method 2 is preferable from the viewpoint that the monomer to be copolymerized is less likely to undergo hydrolysis.

Hereinafter, a method for manufacturing the vinylidene fluoride copolymer (A) by Method 2 will be described.

The method for manufacturing the vinylidene fluoride copolymer (A) by Method 2 preferably includes: obtaining a polymer having a main chain including the structural unit (a1) derived from vinylidene fluoride and at least one structural unit (a3) selected from the group consisting of a structural unit represented by Formula (3), a structural unit represented by Formula (4), and a structural unit represented by Formula (5); and a heating the polymer and obtaining the structural unit (a2) from the structural unit (a3).

That is, the manufacturing method includes obtaining a polymer having the structural unit (a1) and the structural unit (a3) as a main chain of a polymer (hereinafter, also simply referred to as "obtaining a polymer"), and heating the obtained polymer so as to cyclize the structural unit (a3) in the obtained polymer into the structural unit (a2) (hereinafter, also simply referred to as "heating").

Obtaining polymer

In the obtaining of a polymer, the method for manufacturing the vinylidene fluoride copolymer (A) is not particularly limited, and the method is usually performed by a method such as suspension polymerization, emulsion polymerization, or solution polymerization. From the viewpoint of ease of posttreatment, aqueous suspension polymerization and emulsion polymerization are preferable, and from the viewpoint of less impurities, aqueous suspension

polymerization is more preferable.

The aqueous suspension polymerization method is not particularly limited, and examples thereof include a method in which all monomers used in copolymerization are copolymerized in an aqueous medium in the presence of a suspending agent and a polymerization initiator.

All the monomers used for copolymerization are vinylidene fluoride that provides the structural unit (a1) and a monomer that provides the structural unit (a3).

Examples of the monomer that provides the structural unit represented by Formula (3) in the structural unit (a3) include 4-methyl itaconate (hereinafter, also simply referred to as "monomethyl itaconate"), 4-ethyl itaconate (hereinafter, also simply referred to as "monoethyl itaconate"), 4-butyl itaconate, and itaconic acid. Among these, monomethyl itaconate and monoethyl itaconate are preferable from the viewpoint of polymerizability with vinylidene fluoride.

Examples of the monomer that provides the structural unit represented by Formula (4) in the structural unit (a3) include 1-methyl itaconate, 1-ethyl itaconate, and 1-butyl itaconate.

Examples of the monomer that provides the structural unit represented by Formula (5) in the structural unit (a3) include maleic acid, monomethyl maleate, and monoethyl maleate.

An amount of the monomer used that provides the structural unit (a3) is not particularly limited, and is, for example, preferably 0.01 parts by mass or more and 1 part by mass or less, and more preferably 0.02 parts by mass or more and 0.5 parts by mass or less with respect to 100 parts by mass of vinylidene fluoride that provides the structural unit (a1).

The suspending agent is not particularly limited, and examples thereof include methylcellulose, propoxylated methylcellulose, hydroxyethyl methylcellulose, hydroxypropyl methylcellulose, polyvinyl alcohol, polyethylene oxide, and gelatin. An amount of the suspending agent used is not particularly limited, and, for example, the amount is preferably 0.005 parts by mass or more and 1.0 parts by mass or less and more preferably 0.01 parts by mass or more and 0.4 parts by mass or less with respect to 100 parts by mass of all the monomers used in copolymerization.

The polymerization initiator is not particularly limited, and examples thereof include diisopropyl peroxy dicarbonate, dinormal propyl peroxy dicarbonate, dinormal heptafluoropropyl peroxy dicarbonate, isobutyryl peroxide, di(chlorofluoroacyl)peroxide, di(perfluoroacyl)peroxide, and t-butyl peroxypivalate. An amount of the polymerization initiator used is not particularly limited, and, for example, the amount is preferably 0.05 parts by mass or more and 5 parts by mass or less and more preferably 0.15 parts by mass or more and 2 parts by mass or less with respect to 100 parts by mass of all the monomers used in copolymerization.

An amount of all the monomers charged for copolymerization is usually from 1:1 to 1:10 and preferably from 1:1 to 1:5, in terms of a mass ratio of total monomers to water. The polymerization conditions such as polymerization temperature and polymerization time when the suspension polymerization is performed are not particularly limited and, for example, a known polymerization conditions may be employed. The polymerization temperature T is selected as appropriate according to the 10-hour half-life temperature T10 of the polymerization initiator, and is usually selected in the range of $T10 - 25°C \leq T \leq T10 + 25°C$. For example, T10 of t-butyl peroxypivalate and diisopropyl peroxydicarbonate are 54.6°C and 40.5°C, respectively (according to the product catalog of NOF Corporation). Therefore, in polymerization using t-butyl peroxypivalate and diisopropyl peroxydicarbonate as a polymerization initiator, the polymerization temperature T is selected as appropriate in a range of $29.6°C \leq T \leq 79.6°C$ or $15.5°C \leq T \leq 65.5°C$, respectively. Although the polymerization time is not particularly limited, the polymerization time is preferably from 1 to 24 hours considering productivity, for example.

Heating

In the heating, the heating method is not particularly limited, and the polymer to be heated may be in a powder state, or the polymer may be heated in a state of being dispersed in a medium such as water. From the viewpoint of easy handling of the polymer, the polymer is preferably heated in the powder state. The heating temperature is preferably 60°C or higher and 200°C or lower, more preferably 100°C or higher and 190°C or lower, still more preferably 120°C or higher and 180°C or lower from the viewpoint of improving a cyclization percentage from the structural unit (a3) to the structural unit (a2). The heating time is preferably appropriately set within a range of 30 minutes or more and 12 hours or less.

When the total of the structural unit (a2) and the structural unit (a3) in the vinylidene fluoride copolymer (A) is 100.0 mol%, the cyclization percentage from the structural unit (a3) to the structural unit (a2) is preferably 1.0 mol% or more and 100.0 mol% or less, preferably 10.0 mol% or more and 99.0 mol% or less, more preferably 30.0 mol% or more and 99.0 mol% or less, still more preferably 50.0 mol% or more and 99.0 mol% or less, and even more preferably 70.0 mol% or more and 99.0 mol% or less.

The cyclization percentage corresponds to the content of the structural unit (a2) when the total of the structural unit (a2) and the structural unit (a3) in the vinylidene fluoride copolymer (A) is 100.0 mol%.

The cyclization percentage from the structural unit (a3) to the structural unit (a2) can be calculated from Formula (1) described below by determining an amount of the structural unit (a3) introduced by the method described later into each

of the vinylidene fluoride copolymer (A) and the later-described alcohol-treated vinylidene fluoride copolymer.

Cyclization percentage (%) = (1-(amount of structural unit (a3) introduced into vinylidene fluoride copolymer)/(amount of structural unit (a3) introduced into alcohol-treated vinylidene fluoride copolymer)) × 100 (Formula 1)

Specifically, the vinylidene fluoride copolymer (A) is immersed in alcohol ($R_3OH$), heated and stirred at 60°C, and then unreacted alcohol is removed by filtration and vacuum drying. Hereinafter, the vinylidene fluoride copolymer subjected to this treatment is referred to as an "alcohol-treated vinylidene fluoride copolymer". By performing this treatment, all the cyclic acid anhydride structures present in the vinylidene fluoride copolymer (A) can be ring-opened. Any heating and stirring time may be used as long as a peak derived from a cyclized product (hereinafter, the peak is also referred to as "cyclization peak") appearing in the region of from 1780 $cm^{-1}$ to 1800 $cm^{-1}$ is not observed in a spectrum obtained by IR measurement described later.

$R_3$ in the alcohol ($R_3OH$) to be used is the same as the group represented by $R_3$ in the structural unit (a3). That is, it is necessary to appropriately change the alcohol to be used according to the type of group represented by $R_3$ in the structural unit (a3).

$^1H$-NMR is measured for each of the alcohol-treated vinylidene fluoride copolymer and the vinylidene fluoride copolymer (A) (that is, vinylidene fluoride copolymer not subjected to alcohol treatment). From the obtained spectrum, integrated intensity of the peak derived from an $R_3$ group of the structural unit (a3) other than vinylidene fluoride (hereinafter, also referred to as "VDF") and integrated intensity of the peak derived from vinylidene fluoride are each determined. Then, the amount (mol%) of the structural unit (a3) introduced is calculated from Formula (2) described below.

Amount (mol%) of structural unit (a3) introduced = ((mole ratio of structural unit (a3) calculated from integrated intensity of peak derived from $R_3$ group of structural unit (a3) of vinylidene fluoride copolymer)/(mole ratio of structural unit (a3) calculated from integrated intensity of peak derived from $R_3$ group of structural unit (a3) of vinylidene fluoride copolymer + mole ratio of VDF calculated from integrated intensity of peak derived from VDF)) × 100 (Fromula 2)

As the peak derived from VDF, a peak may be used in which a chemical shift is observed at from 3.20 to 2.70 ppm and from 2.43 to 2.10 ppm when the peak derived from DMSO observed when DMSO-d6 is used as a heavy solvent is set at 2.50 ppm. As the peak derived from the $R_3$ group of the structural unit (a3), a peak observed at from 3.50 to 3.65 ppm may be used when $R_3$ is a methyl group, and a peak of a methylene group observed at from 3.90 to 4.20 ppm may be used when $R_3$ is an ethyl group.

Other component

The binder may contain a component other than the vinylidene fluoride copolymer (A) (hereinafter, also referred to as "the other component") as long as the effects of the present invention are not impaired. As the other component, any known additive can be used, and examples thereof include a non-aqueous solvent, a plasticizer, and a dispersant.

Examples of the non-aqueous solvent (S) include N-methyl-2-pyrrolidone (hereinafter, also referred to as NMP), N,N-dimethylformamide, N,N-dimethylacetamide, dimethyl sulfoxide, hexamethylphosphoramide, dioxane, tetrahydrofuran, tetramethylurea, triethyl phosphate, trimethyl phosphate, acetone, cyclohexanone, methyl ethyl ketone, and tetrahydrofuran. One of these may be used alone, or two or more thereof may be used in combination.

Method for manufacturing binder

The binder can be prepared by mixing the vinylidene fluoride copolymer (A) with the other component as necessary.

Electrode mixture

The electrode mixture means an electrode mixture for a positive electrode. The electrode mixture preferably contains the binder of the above-described embodiment and the active material (B).

When the electrode mixture containing the active material (B) contains a binder containing the vinylidene fluoride copolymer (A) containing, in the main chain of the polymer, the structural unit (a2) having a cyclic acid anhydride structure, an electrode having excellent adhesion to metal foil can be formed.

Hereinafter, essential or optional components contained in the electrode mixture will be described.

Binder

The content of the binder is not particularly limited, and is preferably 0.2 parts by mass or more and 15 parts by mass or less, and more preferably 0.5 parts by mass or more and 10 parts by mass or less with respect to 100 parts by mass of the active material (B) described later from the viewpoint of battery performance and adhesion to metal foil.

Active material (B)

The active material (B) means a positive electrode active material. Examples of the active material (B) include a lithium-based positive electrode active material containing lithium. Examples of the lithium-based positive electrode active material include: a complex metal chalcogenide compound represented by General Formula $LiMY_2$ (where M is at least one type of transition metal or two or more types of transition metals such as Co, Ni, Fe, Mn, Cr, or V, and Y is a chalcogen element such as O or S) such as $LiCoO_2$ or $LiNi_xCo_{1-x}O_2$ ($0 < x \leq 1$); a complex metal oxide having a spinel structure such as $LiMn_2O_4$; an olivine-type lithium compound such as $LiFePO_4$ and $LiFeMnPO_4$; and $LiNi_xCo_yAl_{1-x-y}O_2$ ($0 < x + y \leq 1$). Furthermore, the positive electrode active material may be a positive electrode active material obtained by applying a coating on a surface of the compound described above. Furthermore, the positive electrode active material may be a commercially available product.

Other component

The electrode mixture may contain the binder of the above-described embodiment and a component other than the active material (B) (hereinafter, also referred to as "the other component") as long as the effects of the present invention are not impaired. As the other component, all known additives can be used, and examples thereof include a conductive additive, a non-aqueous solvent, an insulating inorganic filler such as alumina, magnesia, or silica, an insulating organic filler such as polytetrafluoroethylene, polyimide, or polyacrylonitrile, a plasticizer, a dispersant, and a flame retardant.

Examples of the conductive additive (C) include carbon black and carbon nanotubes. One of these may be used alone, or two or more thereof may be used in combination.

The content of the conductive additive (C) is not particularly limited, and is preferably 0.1 parts by mass or more and 5 parts by mass or less, and more preferably 0.2 parts by mass or more and 4 parts by mass or less with respect to 100 parts by mass of the active material (B).

Examples of the non-aqueous solvent (S) include N-methyl-2-pyrrolidone (hereinafter, also referred to as "NMP"), N,N-dimethylformamide, N,N-dimethylacetamide, dimethyl sulfoxide, hexamethylphosphoramide, dioxane, tetrahydrofuran, tetramethylurea, triethyl phosphate, trimethyl phosphate, acetone, cyclohexanone, methyl ethyl ketone, and tetrahydrofuran. One of these may be used alone, or two or more thereof may be used in combination.

Method for manufacturing electrode mixture

The electrode mixture can be prepared by mixing the binder of the above-described embodiment, the active material (B), and, if necessary, other components. The mixing method is not particularly limited, and mixing can be performed by a known method.

Electrode

The electrode means a positive electrode. The electrode includes a current collector and an electrode mixture layer disposed on at least one surface of the current collector and containing the electrode mixture of the above-described embodiment.

The electrode mixture layer contains the vinylidene fluoride copolymer (A) containing, in the main chain of the polymer, the structural unit (a2) having a cyclic acid anhydride structure in the binder contained in the electrode mixture. By containing the vinylidene fluoride copolymer (A) as described above, the electrode exhibits excellent adhesion to metal foil.

Current collector

A current collector is a terminal for extracting electricity. A material for each of the current collectors is not particularly limited, and metal foil, metal mesh, or the like of aluminum, copper, iron, stainless steel, steel, nickel, titanium, or the like can be used. In addition, the current collector may be one produced by applying the metal foil, metal mesh, or the like on a surface of a medium. In addition, the current collector may be one produced by applying a surface treatment to metal foil, metal mesh, or the like using a substance other than metal including a polymer and conductive carbon.

Electrode mixture layer

The electrode mixture layer is disposed on at least one surface of the current collector and contains the electrode mixture of the above-described embodiment. For example, the electrode mixture layer is obtained by applying the electrode mixture onto the current collector and drying the electrode mixture.
The method of application is not particularly limited and, for example, a doctor blade method, a reverse roll method, a comma bar method, a gravure method, an air knife method, a die coating method, and a dip coating method can be used.
A drying temperature is, for example, preferably 80°C or higher and 300°C or lower, more preferably 90°C or higher and 250°C or lower, and still more preferably 100°C or higher and 200°C or lower.
A drying time is, for example, preferably 10 seconds or more and 300 minutes or less, more preferably 1 minute or more and 200 minutes or less, and still more preferably 10 minutes or more and 100 minutes or less.
The drying may be performed multiple times at various temperatures. During the drying, pressure may be applied.

Battery

The battery means a non-aqueous electrolyte secondary battery. The battery includes the electrode of the above-described embodiment. As the non-aqueous electrolyte secondary battery, typical and known components other than the positive electrode, for example, a negative electrode, a separator, and the like can be used.

**EXAMPLES**

The present invention will be described in further detail hereafter based on Examples and Comparative Examples, but the present invention is not limited to the following examples.

Preparation example of binder

Examples 1 to 5 and Comparative Example 1

In Examples and Comparative Examples, the following A1 to A6 were prepared as the vinylidene fluoride copolymers (A) according to the following method. A1 to A6 as the vinylidene fluoride copolymers (A) were used as binders in the preparation of the electrode mixture and electrode described later. For the obtained vinylidene fluoride copolymer (A), the inherent viscosity, the crystal melting temperature, the introduced amount and the cyclization percentage of monomethyl itaconate (hereinafter, also referred to as "MI") used as a copolymerizable monomer, and the content of the structural unit (a2) in which the structural unit derived from MI was cyclically anhydrous were measured according to the following method.

Inherent viscosity

First, the viscosity was measured by dissolving 80 mg of the vinylidene fluoride copolymer (A) in 20 mL of N,N-dimethylformamide, and using an Ubbelohde viscometer in a 30°C thermostatic bath. Subsequently, based on the measured value, the inherent viscosity ($\eta_i$) of the vinylidene fluoride copolymer (A) was calculated by the following equation:

$$\eta_i = (1/C) \cdot \ln(\eta/\eta_0)$$

In the equation, $\eta$ is the viscosity of the solution, $\eta_0$ is the viscosity of N,N-dimethylformamide alone, which is a solvent, C is the concentration of the vinylidene fluoride copolymer (A) in the solution, that is, 0.4 g/dL.

Crystal melting temperature

The crystal melting temperature of the vinylidene fluoride copolymer (A) was determined by calorimetry using a differential scanning calorimeter (DSC). Specifically, the vinylidene fluoride copolymer (A) was heated from 30°C to 230°C at 10°C/min (first heating), cooled from 230°C to 30°C at 10°C/min (first cooling), and further heated from 30°C to 230°C at 10°C/min (second heating), and a melting peak was determined by the DSC. Then, the maximum melting peak temperature observed in the second heating was defined as the crystal melting temperature of the vinylidene fluoride

copolymer.

Amount of MI (structural unit (a3)) introduced

The amount of MI introduced into the vinylidene fluoride copolymer (A) was specified by $^1$H-NMR. Specifically, $^1$H-NMR analysis of the vinylidene fluoride copolymer (A) dissolved in DMSO-d6 was performed by using a nuclear magnetic resonance apparatus (NMR, available from JEOL Ltd., JNM-ECZ600R/S1, frequency: 600 MHz).

From the obtained spectrum, the integrated intensity of the peak derived from MI other than vinylidene fluoride (hereinafter, also referred to as "VDF") and the integrated intensity of the peak derived from vinylidene fluoride were determined. Then, the amount (mol%) of MI introduced was calculated from a ratio of the mole ratio of MI calculated from the integrated intensity of the peak derived from MI to a sum of the mole ratio of MI calculated from the integrated intensity of the peak derived from MI and the mole ratio of VDF calculated from the integrated intensity of the peak derived from VDF.

Cyclization percentage of MI (structural unit (a3))

The cyclization percentage in this embodiment refers to the content (mol%) of the structural unit in which the structural unit derived from MI is cyclically anhydrous with respect to the total amount of the structural unit derived from MI and the structural unit in which the structural unit derived from MI is cyclically anhydrous contained in the vinylidene fluoride copolymer (A). For the cyclization percentage of MI in the vinylidene fluoride copolymer (A), the amount of MI introduced was determined by the above-described method for each of the vinylidene fluoride copolymer (A) and the methanol-treated vinylidene fluoride copolymer described later, and the cyclization percentage was calculated by Formula (3) described below. Specifically, the cyclization percentage was calculated by the following procedure.

The vinylidene fluoride copolymer (A) shown in Examples and Comparative Examples described later was immersed in methanol, heated and stirred at 60°C, and then unreacted methanol was removed by filtration and vacuum drying. Hereinafter, the vinylidene fluoride copolymer subjected to this treatment is referred to as an "methanol-treated vinylidene fluoride copolymer". By performing this treatment, all the cyclic acid anhydride structures present in the vinylidene fluoride copolymer (A) can be ring-opened. Any heating and stirring time may be used as long as a peak derived from a cyclized product (hereinafter, the peak is also referred to as "cyclization peak") appearing in the region of from 1780 $cm^{-1}$ to 1800 $cm^{-1}$ is not observed in a spectrum obtained by IR measurement described later.

For each of the methanol-treated vinylidene fluoride copolymer and the vinylidene fluoride copolymer (A) (that is, a vinylidene fluoride copolymer not subjected to a methanol treatment), an amount of MI introduced was determined by the above-described method, and the cyclization percentage was calculated according to Formula (3) described below.

Cyclization percentage (%) = (1-(amount of MI introduced into vinylidene fluoride copolymer shown in Example or Comparative Example)/(amount of MI introduced into methanol-treated vinylidene fluoride copolymer)) × 100 (Formula 3)

Content of structural unit (a2) in which structural unit derived from MI is cyclically anhydrous

From the introduced amount and cyclization percentage of MI described above, the content of the structural unit (a2) in which the structural unit derived from MI was cyclically anhydrous was calculated.

Example 1: Preparation of vinylidene fluoride copolymer A1

In an autoclave with an internal volume of 10 liters, 6505 g of ion-exchanged water as a dispersion medium, 2.17 g of a cellulose-based suspending agent (Metolose SM-100, available from Shin-Etsu Chemical Co., Ltd.), 1.08 g of monomethyl itaconate, 14.09 g of a polymerization initiator (t-butyl peroxypivalate-HFE-347pc-f solution with a concentration of 50 wt%), and 2168 g of vinylidene fluoride were charged, and the temperature was increased to 55°C over 2 hours while the mixture was stirred. While the temperature was maintained at 55°C, from 3 hours after the start of temperature increase, a monomethyl itaconate (hereinafter, also referred to as "MI") aqueous solution with a concentration of 5 mass% was added over 12 hours in an amount of 20.60 in terms of solute. Polymerization was terminated at the point when the pressure in the system decreased to 1.5 MPa and was performed for a total of 21 hours from the start of temperature increase. After the completion of the polymerization, the slurry containing the vinylidene fluoride copolymer was washed with water, dehydrated, and vacuum-dried. Accordingly, a powder of the vinylidene fluoride copolymer was obtained. The yield of the obtained vinylidene fluoride copolymer was 88%, the inherent viscosity $\eta i$ was 2.6 dL/g, and the amount of MI introduced was 0.36 mol%. The obtained vinylidene fluoride copolymer was heat-treated at 80°C for 10 hours under a nitrogen stream to obtain the vinylidene fluoride copolymer A1 having the structural unit (a2) having a cyclic acid anhydride

structure. The cyclization percentage of the vinylidene fluoride copolymer A1 was 1.6%.

Example 2: Preparation of vinylidene fluoride copolymer A2

The vinylidene fluoride copolymer A2 was obtained in the same manner as in Example 1 except that the heat treatment was performed at 100°C for 4 hours under a nitrogen stream in place of the heat treatment at 80°C for 10 hours under a nitrogen stream in Example 1.

The cyclization percentage of the vinylidene fluoride copolymer A2 was 11.4%.

Example 3: Preparation of vinylidene fluoride copolymer A3

The vinylidene fluoride copolymer A3 was obtained in the same manner as in Example 1 except that the heat treatment was performed at 130°C for 1 hour under a nitrogen stream in place of the heat treatment at 80°C for 10 hours under a nitrogen stream in Example 1.

The cyclization percentage of the vinylidene fluoride copolymer A3 was 32.2%.

Example 4: Preparation of vinylidene fluoride copolymer A4

The vinylidene fluoride copolymer A4 was obtained in the same manner as in Example 1 except that the heat treatment was performed at 130°C for 4 hours under a nitrogen stream in place of the heat treatment at 80°C for 10 hours under a nitrogen stream in Example 1.

The cyclization percentage of the vinylidene fluoride copolymer A4 was 65.3%.

Example 5: Preparation of vinylidene fluoride copolymer A5

The vinylidene fluoride copolymer A5 was obtained in the same manner as in Example 1 except that the heat treatment was performed at 140°C for 6.5 hours under a nitrogen stream in place of the heat treatment at 80°C for 10 hours under a nitrogen stream in Example 1.

The cyclization percentage of the vinylidene fluoride copolymer A5 was 82.7%.

Comparative Example 1: Preparation of vinylidene fluoride copolymer A6

The vinylidene fluoride copolymer A6 was obtained in the same manner as in Example 1 except that the heat treatment at 80°C for 10 hours was not performed under a nitrogen stream in Example 1.

Preparation example of electrode mixture

Examples 1A to 5A and Comparative Example 1A

In the preparation of the electrode mixture, the following B1 was used as the active material (B).

B1: nickel-cobalt-manganese ternary lithium-based composite metal oxide (Ni content: 83%, Co content: 8%, Mn content: 8%, specific surface area: 0.4 $m^2/g$, average particle size $D_{50}$: 12.1 μm)

In the preparation of the electrode mixture, the following C1 was used as the conductive additive agent (C).

C1: Carbon black (Super-P available from Timcal Ltd.)

In the preparation of the electrode mixture, the following S1 was used as the non-aqueous solvent (S).

S1: N-methyl-2-pyrrolidone (NMP)

100 parts by mass of the active material (B) and 1 part by mass of the conductive additive (C) were added to a polyethylene cup, and kneaded at 800 rpm for 1 minute using a mixer (AR-310 available from THINKY) to obtain a primary kneaded product.

A binder solution containing 1 part by mass of each of the binders of Examples 1 to 5 and Comparative Example 1 obtained above and a non-aqueous solvent (S) in such an amount that the concentration of the solid content was 80 mass% with respect to a total mass of the electrode mixture was added to the primary kneaded product, and the mixture was kneaded at 2000 rpm for 1 minute using the mixer to form a paste. The mixture was naturally cooled until the temperature of the electrode mixture heated by the kneading became room temperature, and then further kneaded at 2000 rpm for 1 minute. By performing this operation five times, a positive electrode mixture in a slurry form of Examples 1A to 5A and Comparative Example 1A was obtained.

Preparation example of electrode

Examples 1B to 5B and Comparative Example 1B

Each positive electrode of Examples 1B to 5B and Comparative Example 1B was produced using the obtained electrode mixtures of Examples 1A to 5A and Comparative Example 1A, and peel strength of the electrode was measured. Specifically, each electrode mixture described above was applied onto an aluminum foil having a thickness of 15 μm using a bar coater, and then this was dried at 110°C for 30 minutes in a nitrogen atmosphere using a thermostatic chamber to obtain one-side coated electrodes of Examples 1B to 5B and Comparative Example 1B having a dry mixture weight of 300 g/m$^2$.

Peel strength

Each of the obtained one-side coated electrodes was cut to a length of 50 mm and a width of 20 mm, and the peel strength between the aluminum foil and the mixture layer was evaluated. Specifically, a top face of the formed mixture layer and a thick sheet of plastic (made of acrylic resin; thickness: 5 mm) were adhered. Then, a 90 degree peel test was conducted in accordance with JIS K 6854 using a tensile tester (Universal Testing Instrument Model: STA-1150, available from Orientec Co., Ltd.) at a head speed of 10 mm/min.

Table 1 shows the heat treatment condition after polymerization in Examples 1 to 5 and Comparative Example 1, shows, for the obtained vinylidene fluoride copolymers A1 to A6, the inherent viscosity, the crystal melting temperature, the presence or absence of the cyclization peak based on IR measurement, the cyclization percentage of MI, and the content of the structural unit (a2) in which the structural unit derived from MI is cyclically anhydrous, and shows the peel strength of each electrode obtained in Examples 1B to 5B and Comparative Example 1B. In Table 1, the content of the structural unit (a2) is expressed as "Content of structural unit (a2) having cyclic acid anhydride structure in all structural units".

In addition, IR spectra and $^{19}$F-NMR spectra obtained for the vinylidene fluoride copolymers A1 to A6 are shown in FIGS. 1 and 2, respectively.

[Table 1]

| | Example 1 | Example 2 | Example 3 | Example 4 | Example 5 | Comparative Example 1 |
|---|---|---|---|---|---|---|
| Heat treatment conditions after polymerization (temperature, time) | 80°C 10h | 100°C 4h | 130°C 1h | 130°C 4h | 140°C 6. 5h | - |
| Inherent viscosity (dL/g) | 2.6 | 2.6 | 2.6 | 2.6 | 2.6 | 2.6 |
| Crystal melting temperature (Tm) (°C) | 168.7 | 166 | 166.3 | 167.3 | 167.7 | 168 |
| Presence or absence of cyclization peak (IR) | Presence | Presence | Presence | Presence | Presence | None |
| Cyclization percentage (mol%) | 1.6 | 11.4 | 32.2 | 65.3 | 82.7 | 0 |
| Content (mol%) of structural unit (a2) having cyclic acid anhydride structure in all structural units | 0.0059 | 0.042 | 0.12 | 0.24 | 0.3 | 0 |
| Peel strength (gf/mm) | 2.41 | 2.6 | 2.98 | 3.57 | 3.94 | 2.18 |

As shown in Table 1, when an electrode was formed using a binder containing the vinylidene fluoride copolymer (A) of Comparative Example 1 that did not contain the structural unit (a2), the peel strength was only 2.18 gf/mm. On the other hand, when a binder containing the vinylidene fluoride copolymer (A) of Examples 1 to 5 in which the structural unit (a2) was introduced into the vinylidene fluoride copolymer (A) was used, it was found that the peel strength increased, and the peel strength also increased as the content of the structural unit (a2) increased.

## Claims

1. A binder comprising a vinylidene fluoride copolymer (A) containing, in a main chain, a structural unit (a1) derived from vinylidene fluoride and a structural unit (a2) having a cyclic acid anhydride structure.

**2.** The binder according to claim 1, wherein the structural unit (a2) having a cyclic acid anhydride structure is a structural unit represented by Formula (1) or Formula (2) described below:

[Chem. 1]

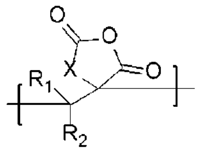
· · · (1)
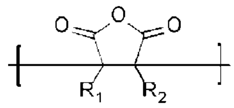
· · · (2)

wherein in Formulas (1) and (2), $R_1$ and $R_2$ each independently represent a hydrogen atom, a halogen atom, or an alkyl group having from 1 to 5 carbons, and X represents an alkylene group having from 1 to 5 carbons and optionally having a substituent.

**3.** The binder according to claim 1 or 2, wherein the main chain of the vinylidene fluoride copolymer (A) contains at least one structural unit (a3) selected from the group consisting of a structural unit represented by Formula (3) described below, a structural unit represented by Formula (4) described below, and a structural unit represented by Formula (5) described below:

[Chem. 2]

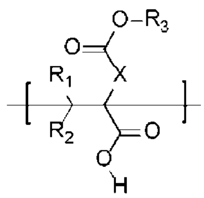
· · · (3)

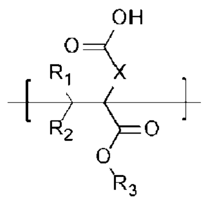
· · · (4)

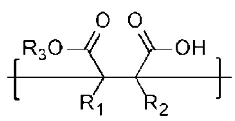
· · · (5)

wherein in Formula (3), Formula (4), and Formula (5), $R_1$ and $R_2$ are each independently a hydrogen atom, a halogen atom, or an alkyl group having from 1 to 5 carbons, and $R_3$ represents a hydrogen atom or an alkyl group having from 1 to 5 carbons, and X represents an alkylene group having from 1 to 5 carbons and optionally having a substituent.

**4.** The binder according to claim 1 or 2, wherein a content of the structural unit (a2) with respect to all structural units of the vinylidene fluoride copolymer (A) is 0.001 mol% or more and 1.0 mol% or less.

**5.** The binder according to claim 3, wherein when a total of the structural unit (a2) and the structural unit (a3) in the vinylidene fluoride copolymer (A) is 100 mol%, the content of the structural unit (a2) is 1.0 mol% or more and 99.0 mol% or less.

**6.** An electrode mixture comprising:

the binder described in claim 1 or 2; and
an active material (B).

**7.** An electrode comprising:

a current collector; and
an electrode mixture layer disposed on at least one surface of the current collector, the electrode mixture layer containing the electrode mixture described in claim 6.

**8.** A battery comprising the electrode described in claim 7.

**9.** A method for manufacturing the binder according to claim 1 or 2, the method comprising:

obtaining a polymer having a main chain containing a structural unit (a1) derived from vinylidene fluoride and at least one structural unit (a3) selected from the group consisting of a structural unit represented by Formula (3), a structural unit represented by Formula (4), and a structural unit represented by Formula (5); and
heating the polymer and obtaining the structural unit (a2) from the structural unit (a3).

[FIG. 1]

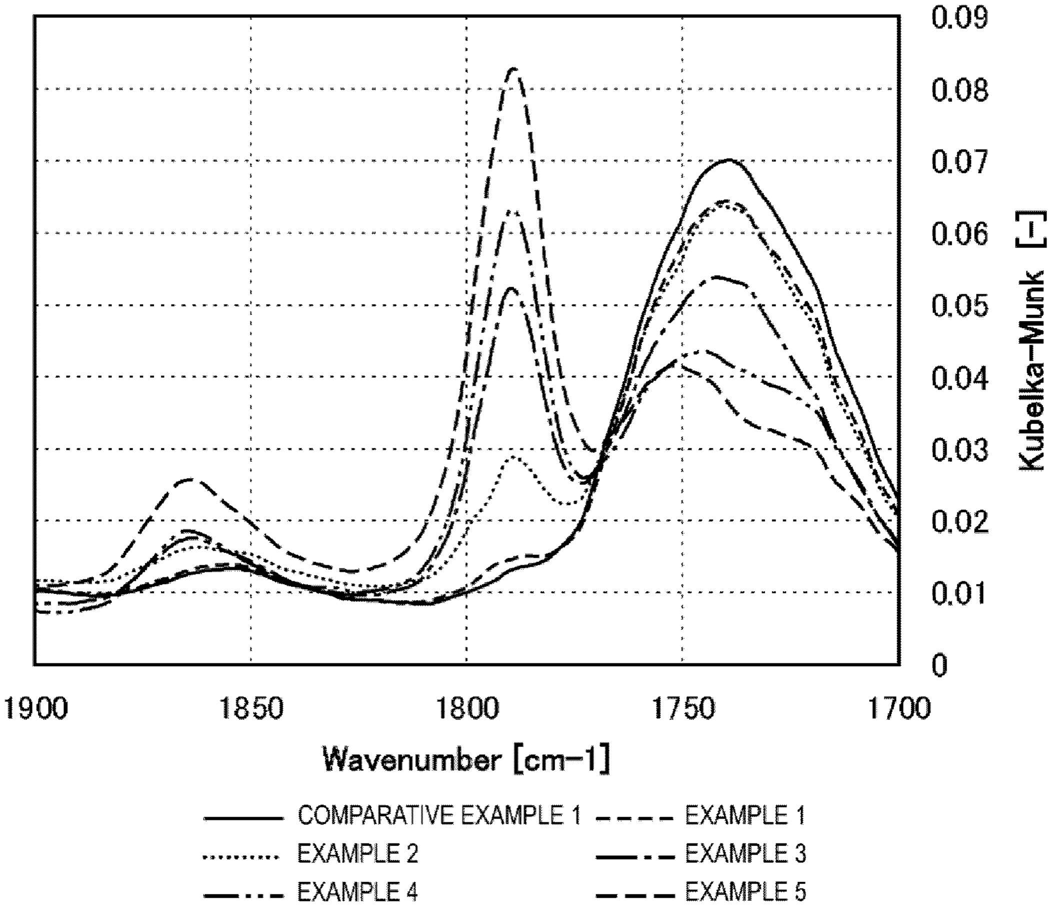
0.09
0.08
0.07
0.06
0.05
0.04
0.03
0.02
0.01
0
1900
1850
1800
1750
1700
Wavenumber [cm−1]
Kubelka-Munk [-]
COMPARATIVE EXAMPLE 1
EXAMPLE 1
EXAMPLE 2
EXAMPLE 3
EXAMPLE 4
EXAMPLE 5

[FIG. 2]

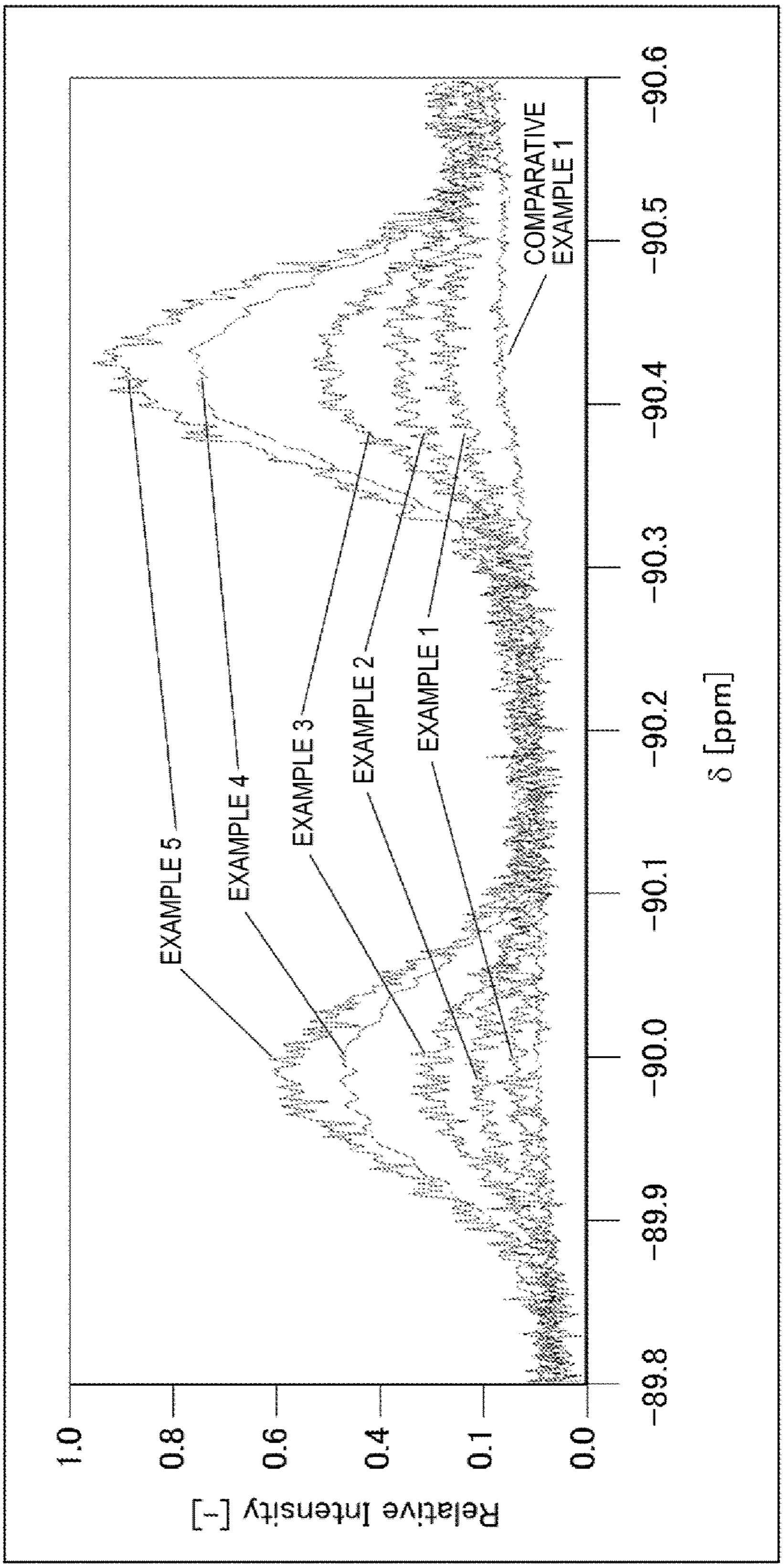
Relative Intensity [-]
1.0
0.8
0.6
0.4
0.1
0.0
δ [ppm]
-89.8
-89.9
-90.0
-90.1
-90.2
-90.3
-90.4
-90.5
-90.6
EXAMPLE 5
EXAMPLE 4
EXAMPLE 3
EXAMPLE 2
EXAMPLE 1
COMPARATIVE EXAMPLE 1

## INTERNATIONAL SEARCH REPORT

International application No. **PCT/JP2024/003005**

### A. CLASSIFICATION OF SUBJECT MATTER

***H01M 4/62***(2006.01)i; ***C08F 8/48***(2006.01)i; ***C08F 214/22***(2006.01)i
FI: H01M4/62 Z; C08F8/48; C08F214/22

According to International Patent Classification (IPC) or to both national classification and IPC

### B. FIELDS SEARCHED

Minimum documentation searched (classification system followed by classification symbols)

H01M4/62; C08F8/48; C08F214/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br><br>Y | WO 2010/035587 A1 (KUREHA CORPORATION) 01 April 2010 (2010-04-01)<br>claims 1, 5-6, 8-11, paragraphs [0037], [0098], [0184], example B7, table 3 | 1-8<br><br>9 |
| Y | US 2001/0012880 A1 (WHELAND, Robert C. et al.) 09 August 2001 (2001-08-09)<br>paragraphs [0027], [0037] | 9 |
| A | EP 4033580 A1 (BEIJING WEILION NEW ENERGY TECHNOLOGY CO., LTD.) 27 July 2022 (2022-07-27)<br>entire text, all drawings | 1-9 |
| A | US 3357936 A (THE DOW CHEMICAL COMPANY) 12 December 1967 (1967-12-12)<br>entire text, all drawings | 1-9 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 April 2024** | **23 April 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/003005**

| Patent document cited in search report | Publication date (day/month/year) | Patent family member(s) | Publication date (day/month/year) |
|---|---|---|---|
| WO 2010/035587 A1 | 01 April 2010 | US 2011/0177390 A1<br>claims 1, 5-6, 8-11, paragraphs [0041], [0105], [0193], example B7, table 3<br>KR 10-2011-0063680 A<br>CN 102165633 A | |
| US 2001/0012880 A1 | 09 August 2001 | EP 911347 A2<br>CN 1223271 A | |
| EP 4033580 A1 | 27 July 2022 | WO 2021/078107 A1<br>CN 110707357 A | |
| US 3357936 A | 12 December 1967 | GB 1098831 A<br>BE 659264 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5797206 B